# EUROPEAN PATENT APPLICATION

(11) **EP 3 869 601 A1**
(43) Date of publication of application: **25.08.2021**
(21) Application number: 19873069.9
(22) Date of filing: 11.10.2019
(51) Int. Cl.: H01M 8/18, H01M 8/0258, H01M 8/04, H01M 8/2465, H01M 8/249

(54) **CELL FRAME AND REDOX FLOW BATTERY**

(30) Priority: 18.10.2018 JP 2018196652
(71) Applicant: Toyo Engineering Corporation, Tokyo 100-6511 (JP)
(72) Inventor: NAKAO, Takato, Narashino-shi, Chiba 275-0024 (JP); THEEDA, Uma Jaya Ravali, Narashino-shi, Chiba 275-0024 (JP)
(74) Representative: Hamer, Christopher K.
(86) International application number: PCT/JP2019/040191
(87) International publication number: WO 2020/080278

(57) **Abstract**

Cell frame 20 includes: frame body 21 having an opening 22, frame body 21 including through-hole 31 for passage of a fluid containing an active material, through-hole 31 penetrating from one surface of frame body 21 to the other surface thereof around opening 22, and groove-like slit 35 formed in one surface or the other surface and connecting through-hole 31 and opening 22; and rotor 40 made of an insulating material, rotor 40 received in slit 35 and forced to rotate by the flow of the fluid through slit 35 between through-hole 31 and opening 22.

## Description

### Technical Field

The present invention relates to a cell frame and a redox flow battery.

### Background Art

Conventionally, as a secondary battery for energy storage, a redox flow battery is known which is charged and discharged through a redox reaction of active materials contained in an electrolyte solution. The redox flow battery has features such as easy increase in capacity, long life, and accurate monitoring of its state of charge. Because of these features, in recent years, the redox flow battery has attracted a great deal of attention, particularly for application in stabilizing the output of renewable energy whose power production fluctuates widely or leveling the electric load.

In the meantime, to obtain a predetermined voltage, the redox flow battery is generally configured to include a cell stack having a plurality of cells that are stacked. However, such a configuration has a problem that a current loss (i.e. shunt current loss) is generated through the electrolyte solution. As one of methods for reducing the shunt current loss, there is known a method for increasing the electrical resistance of the electrolyte solution in a slit (i.e. flow channel) provided in a cell frame that constitutes the cell, and many proposals have been made using this method. Patent Literature 1 proposes a method for reducing the shunt current loss by changing the flow channel structure for each cell frame so as to increase the electrical resistance of the electrolyte solution from the center toward the end of the cell stack in the stacking direction thereof. Patent Literature 2 proposes a method for reducing the shunt current loss by incorporating a structure of forming droplets of the electrolyte solution into the flow channel of the cell frame and thus by forming an insulating space of air in the flow channel, so as to increase the electrical resistance of the electrolyte solution.

### Citation List

### Patent Literature

Patent Literature 1: JP 2013-80611 A
Patent Literature 2: JP-2017-134919 A

### Summary of the Invention

### Technical Problem

In the method described in Patent Literature 1, the cell frames having different flow channel structures must be prepared and stacked in an appropriate order to form the cell stack, and therefore the manufacturing process becomes complicated. Further, in this method, the length of the slit is changed for each cell frame to change the electrical resistance of the electrolyte solution. Therefore, the flow rate of the electrolyte solution may differ significantly between the cell frames (cells), which is considered undesirable for performing stable operation (charge/discharge process). On the other hand, in the method described in Patent Literature 2, the flow channel structure for forming droplets of the electrolyte solution becomes complicated, and a complicated operation control is also needed to ensure formation of the insulating space of air, such as need for appropriate management of the droplet volume of the electrolyte solution.

It is therefore an object of the present invention to provide a cell frame and a redox flow battery in which the shunt current loss can be reduced with a simple configuration.

### Solution to Problem

To achieve the above object, a cell frame according to the present invention includes: a frame body having an opening, the frame body including a through-hole for passage of a fluid containing an active material, the through-hole penetrating from one surface of the frame body to the other surface thereof around the opening, and a groove-like slit formed in the one surface or the other surface and connecting the through-hole and the opening; and a rotor made of an insulating material, the rotor received in the slit and forced to rotate by a flow of the fluid through the slit between the through-hole and the opening.

According to an aspect of the present invention, a redox flow battery includes a cell stack having a plurality of stacked cells, wherein at least one of a plurality of cell frames that forms the plurality of cells is the cell frame as described above.

According to another aspect of the present invention, a redox flow battery includes a cell stack having a plurality of stacked cells, wherein the cell stack is divided into a plurality of cell groups each of which consists of the plurality of cells, the plurality of cell groups is connected to each other such that a fluid containing an active material flows in parallel through the plurality of cell groups, and the plurality of cells in each of the cell groups is connected to each other such that the fluid flows in series or in parallel through the plurality of cells, and wherein the redox flow battery comprises a rotor received in at least one of a plurality of passage that are respectively connected to the plurality of cell groups, the rotor made of an insulating material and forced to rotate by a flow of the fluid through the at least one flow passage.

According to the cell frame and the redox flow battery, it is possible to increase the electrical resistance of the fluid (i.e. electrolyte solution) in the slit (i.e. flow channel) without significantly affecting the flow rate of the fluid (i.e. electrolyte solution) flowing through the slit (i.e. flow channel). Further, since only installation of the rotor in the slit (i.e. flow channel) is required, the flow channel structure does not become complicated, and a complicated operation control is not needed.

### Advantageous Effects of Invention

As described above, according to the present invention, the shunt current loss can be reduced with a simple configuration.

### Brief Description of the Drawings

FIG. 1A is a schematic configuration diagram of a redox flow battery according to a first embodiment;
FIG. 1B is a schematic configuration diagram of a cell stack that constitutes the redox flow battery according to the first embodiment;
FIG. 2 is a schematic plan view of a cell frame according to the first embodiment;
FIG. 3A is a schematic plan view showing a cross-shaped rotor in a certain rotational position;
FIG. 3B is a schematic plan view showing the cross-shaped rotor in a rotational position subsequent to the rotational position shown in FIG. 3A;
FIG. 3C is a schematic plan view showing the cross-shaped rotor in a rotational position subsequent to the rotational position shown in FIG. 3B;
FIG. 3D is a schematic plan view showing the cross-shaped rotor in a rotational position subsequent to the rotational position shown in FIG. 3C;
FIG. 3E is a schematic plan view showing the cross-shaped rotor in a rotational position subsequent to the rotational position shown in FIG. 3D;
FIG. 3F is a schematic plan view showing the cross-shaped rotor in a rotational position subsequent to the rotational position shown in FIG. 3E;
FIG. 4A is a schematic plan view showing the cross-shaped rotor in a rotational position subsequent to the rotational position shown in FIG. 3F;
FIG. 4B is a schematic plan view showing the cross-shaped rotor in a rotational position subsequent to the rotational position shown in FIG. 4A;
FIG. 4C is a schematic plan view showing the cross-shaped rotor in a rotational position subsequent to the rotational position shown in FIG. 4B;
FIG. 4D is a schematic plan view showing the cross-shaped rotor in a rotational position subsequent to the rotational position shown in FIG. 4C;
FIG. 4E is a schematic plan view showing the cross-shaped rotor in a rotational position subsequent to the rotational position shown in FIG. 4D;
FIG. 5 is a schematic plan view of the cell frame according to a variation of the first embodiment;
FIG. 6 is a schematic plan view of the cell frame according to a variation of the first embodiment;
FIG. 7A is a schematic configuration diagram of the redox flow battery according to a variation of the first embodiment;
FIG. 7B is a schematic configuration diagram of a cell group that constitutes the redox flow battery according to the variation of the first embodiment; and
FIG. 8 is a schematic plan view of the cell frame according to a second embodiment.

### Description of Embodiments

Embodiments of the present invention will be described below with reference to the drawings.

### (First Embodiment)

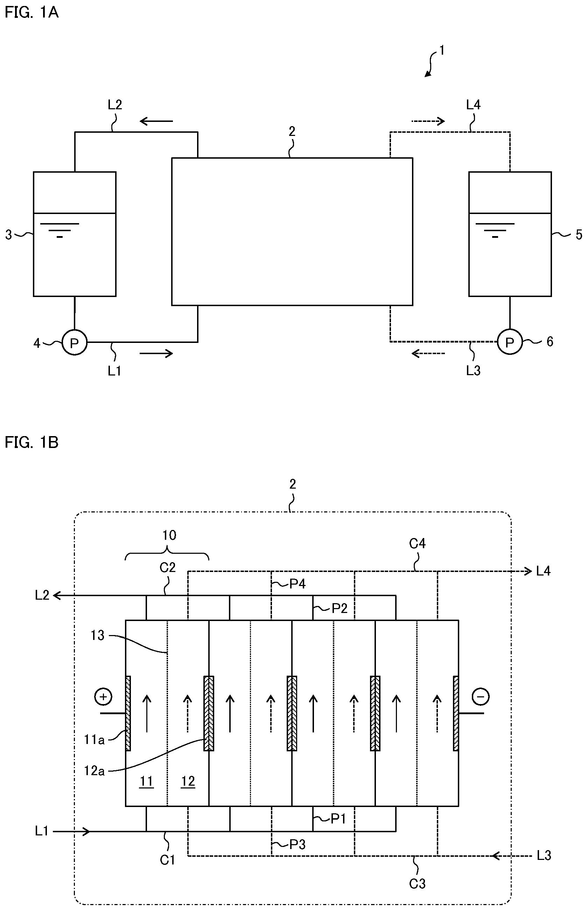

FIG. 1A is a schematic configuration diagram of a redox flow battery according to a first embodiment of the present invention. FIG. 1B is a schematic configuration diagram of a cell stack that constitutes the redox flow battery of this embodiment.

Redox flow battery 1 is configured to be charged and discharged through a redox reaction of positive- and negative-electrode active materials in cell 10, and includes cell stack 2 having a plurality of stacked cells 10. Cell stack 2 is connected to positive electrode-side tank 3 for storing a positive electrolyte solution through positive electrode-side incoming pipe L1 and positive electrode-side outgoing pipe L2. Positive electrode-side incoming pipe L1 is provided with positive electrode-side pump 4 for circulating the positive electrolyte solution between positive electrode-side tank 3 and cell stack 2. Cell stack 2 is connected to negative electrode-side tank 5 for storing a negative electrolyte solution through negative electrode-side incoming pipe L3 and a negative electrode outgoing pipe L4. Negative electrode-side incoming pipe L3 is provided with negative electrode-side pump 6 for circulating the negative electrolyte solution between negative electrode-side tank 5 and cell stack 2. As the electrolyte solution, any fluid containing an active material may be used, such as a slurry formed by suspending and dispersing a granular active material in a liquid phase, or a liquid active material itself. Therefore, the electrolyte solution described herein is not limited to a solution of an active material.

Cells 10 are separated from each other by a cell frame described below. A detailed configuration of the cell frame will be described below. Although four cells 10 are shown in FIG. 1B, the number of cells 10 in cell stack 2 is not limited thereto.

Each of cells 10 includes positive cell 11 that houses positive electrode 11a, negative cell 12 that houses negative electrode 12a, and membrane 13 that separates positive cell 11 and negative cell 12. Positive cell 11 is connected to positive electrode-side incoming pipe L1 through individual supply flow channel P1 and common supply flow channel C1, and is connected to positive electrode-side outgoing pipe L2 through individual return flow channel P2 and common return flow channel C2. This allows positive cell 11 to be supplied with the positive electrolyte solution containing the positive-electrode active material from positive electrode-side tank 3. Thus, in positive cell 11, an oxidation reaction occurs during a charge process in which the positive-electrode active material changes from a reduced state to an oxidized state, and a reduction reaction occurs during a discharge process in which the positive-electrode active material changes from the oxidized state to the reduced state. On the other hand, negative cell 12 is connected to negative electrode-side incoming pipe L3 through individual supply flow channel P3 and common supply flow channel C3, and is connected to negative electrode-side outgoing pipe L4 through individual return flow channel P4 and common return flow channel C4. This allows negative cell 12 to be supplied with the negative electrolyte solution containing the negative-electrode active material from negative electrode-side tank 5. Thus, in negative cell 12, a reduction reaction occurs during the charge process in which the negative-electrode active material changes from an oxidized state to a reduced state, and an oxidation reaction occurs during the discharge process in which the negative-electrode active material changes from the reduced state to the oxidized state.

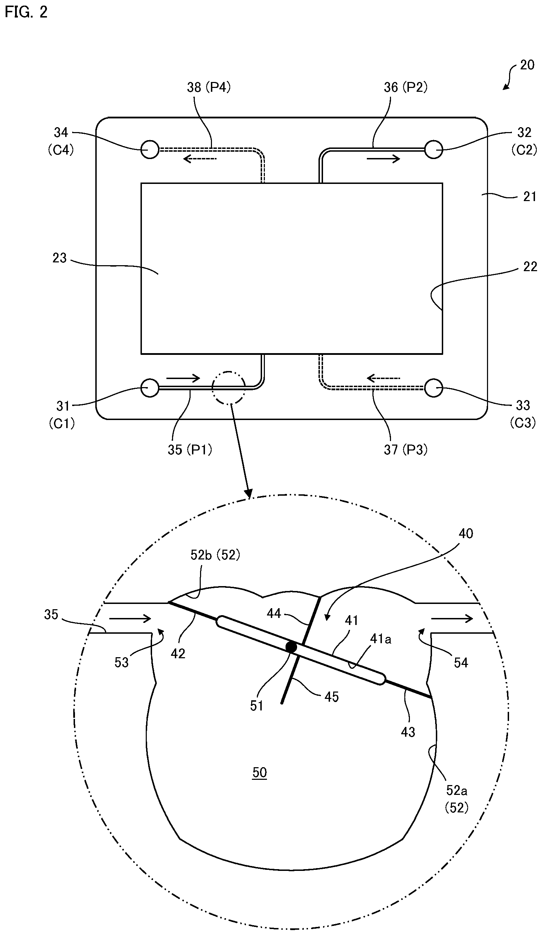

FIG. 2 is a schematic plan view of the cell frame that constitutes the cell of this embodiment, showing a plane viewed from the stacking direction of the cell stack.

As described above, cell frame 20 separates adjacent cells 10 from each other, and includes frame 21 and bipolar plate 23 mounted to opening 22 of frame 21. A space inside opening 22 is divided by bipolar plate 23 into two compartments, one of which (i.e. compartment on a side facing out of the page) houses positive electrode 11a and the other of which (i.e. compartment on a side facing into the page) houses negative electrode 12a. In other words, positive cell 11 for housing positive electrode 11a is formed between one surface of bipolar plate 23 and membrane 13, and negative cell 12 for housing negative electrode 12a is formed between the other surface of bipolar plate 23 and membrane 13.

Frame body 21 includes through-holes 31-34 that are formed near the four corners thereof around opening 22 and that penetrate respectively from one surface of frame body 21 to the other surface thereof in its thickness direction. Once cell frames 20 are stacked to form cell stack 2, through-holes 31-34 respectively constitute common flow channels C1-C4 as described above, through which the electrolyte solution flows. Specifically, through-hole 31 on the lower left corner and through-hole 32 on the upper right corner respectively constitute common supply flow channel C1 and common return flow channel C2 for the positive electrolyte solution, and through-hole 33 on the lower right corner and through-hole 34 on the upper left corner respectively constitute common supply flow channel C3 and common return flow channel C4 for the negative electrolyte solution.

Frame body 21 includes groove-like slits 35, 36 that are formed on one surface (i.e. surface facing out of the page) and that connect through-holes 31, 32 to a portion of opening 22 for receiving positive electrode 11a. Once cell frames 20 are stacked to form cell stack 2, slits 35, 36 respectively constitute individual flow channels P1, P2 for the positive electrolyte solution as described above. Therefore, the positive electrolyte solution is supplied from through-hole 31 (common supply flow channel C1) to the portion of opening 22 that receives positive electrode 11a (positive cell 11) through slit 35 (individual supply flow channel P1), and is returned to through-hole 32 (common return flow channel C2) through slit 36 (individual return flow channel P2).

Further, frame body 21 includes groove-like slits 37, 38 that are formed on the other surface (i.e. surface facing into the page) and that connect through-holes 33, 34 to a portion of opening 22 for receiving negative electrode 12a. Once cell frames 20 are stacked to form cell stack 2, slits 37, 38 respectively constitute individual flow channels P3, P4 for the negative electrolyte solution as described above. Therefore, the negative electrolyte solution is supplied from through-hole 33 (common supply flow channel C3) to the portion of opening 22 that receives negative electrode 12a (negative cell 12) through slit 37 (individual supply flow channel P3), and is returned to through-hole 34 (common return flow channel C4) through slit 38 (individual return flow channel P4).

Further, cell frame 20 includes cross-shaped rotor 40 made of an insulating material that is received in slit 35. Cross-shaped rotor 40 can be forced to rotate by the flow of the electrolyte solution through slit 35 between through-hole 31 and opening 22, as described in detail below. Although not described and illustrated herein, the remaining slits 36-38 of four slits 35-38 are also provided with the same cross-shaped rotor 40 (including a variation thereof described below).

Cross-shaped rotor 40 is received in rotor receiving recess 50 which is a portion of slit 35 that is wider than the other portions thereof, and has a constant width corresponding to the depth of rotor receiving recess 50 (i.e. length along the thickness direction of frame body 21 perpendicular to the page). The depth of rotor receiving recess 50 may or may not be the same as the depth of slit 35, but is preferably the same as or larger than the depth of slit 35 from the viewpoint of preventing an unnecessary pressure drop when the electrolyte solution passes through rotor receiving recess 50.

Cross-shaped rotor 40 includes elongated base 41, a pair of main vanes 42, 43, and a pair of auxiliary vanes 44, 45. Base 41 includes long hole 41a extending in the longitudinal direction of base 41. Long hole 41a receives shaft 51 projecting from the bottom surface of rotor receiving recess 50 in the thickness direction of frame body 21, whereby shaft 51 is relatively movable with respect to long hole 41a. Thus, base 41 is supported by shaft 51 inserted into long hole 41a to be longitudinally slidable and rotable. The pair of main vanes 42, 43 extend in opposite directions from both longitudinal ends of base 41. The pair of auxiliary vanes 44, 45 are provided in a longitudinal center portion of base 41, and extend in opposite directions from both transverse ends of base 41 along a direction perpendicular to the pair of main vanes 42, 43.

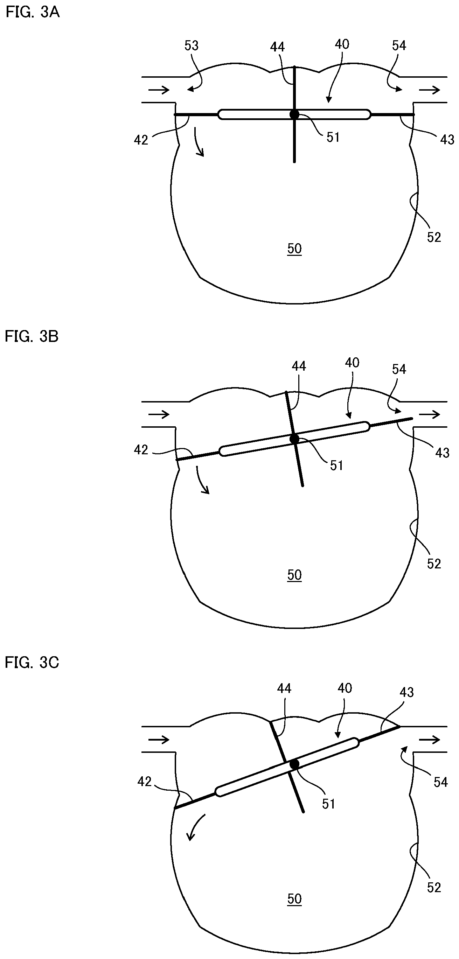

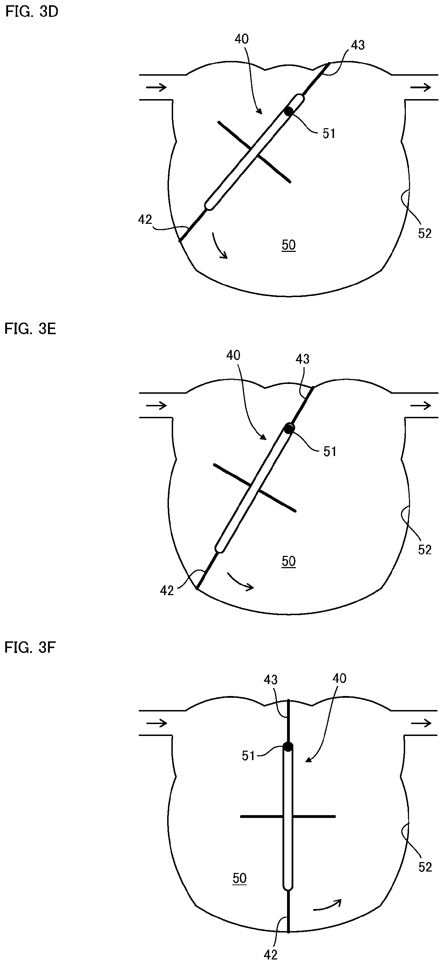

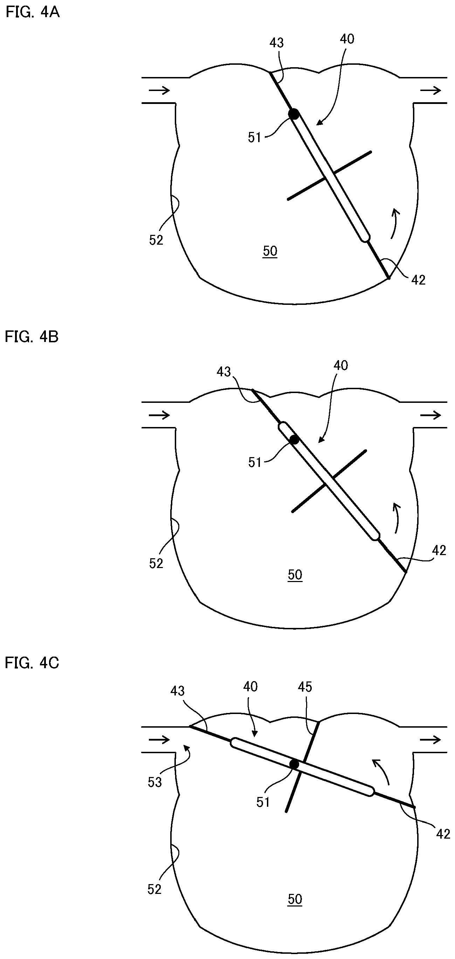

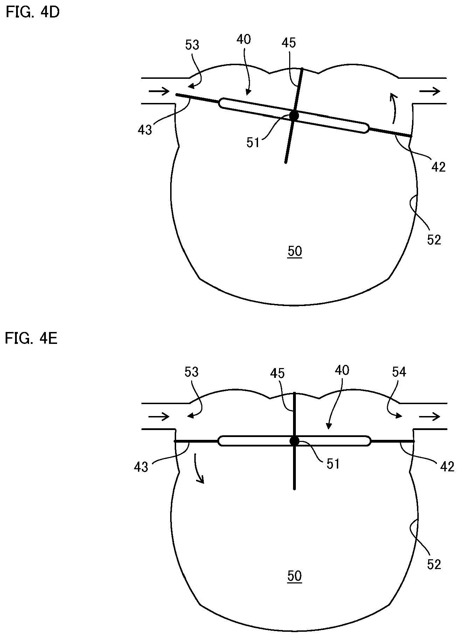

With this configuration, cross-shaped rotor 40 is forced by the flow of the electrolyte solution through slit 35 to rotate while sliding with respect to shaft 51 in a plane perpendicular to the depth direction of slit 35 (i.e. in a plane parallel to the page). Hereinafter, the rotational operation of cross-shaped rotor 40 will be described with reference to FIGS. 3A to 4E. FIGS. 3A to 4E are schematic plan views showing different rotational positions during half-rotation of the cross-shaped rotor. The planar shape of the cross-shaped rotor is symmetric with respect to a point, and the rotational positions shown in FIGS. 3A and 4E correspond to substantially the same rotational position. Therefore, in the following description, these two rotational positions may not be distinguished from each other.

When cross-shaped rotor 40 is in the rotational position shown in FIG. 3A and forced by the flow of the electrolyte solution into rotor receiving recess 50 through electrolyte solution inlet 53, it rotates counterclockwise about shaft 51 and reaches the rotational position shown in FIG. 3B. Next, during rotation of the cross-shaped rotor from the rotational position shown in FIG. 3B to the rotational position shown in FIG. 3C, cross-shaped rotor 40 starts sliding with respect to shaft 51 at a predetermined rotational position. In other words, during passage of the tip of second main vane 43 of the pair of main vanes through electrolyte solution outlet (i.e. fluid outlet) 54, the center of cross-shaped rotor 40 (i.e. the center of gravity thereof in the plane of its rotation) starts deviating from shaft 51 at a predetermined rotational position. During this rotation from the rotational position shown in FIG. 3A to the rotational position shown in FIG. 3C, the tip of at least first main vane 42 of the pair of main vanes and the tip of first auxiliary vane 44 of the pair of auxiliary vanes are substantially in contact with inner wall surface 52 of rotor receiving recess 50. Thus, electrical conduction through the electrolyte solution between electrolyte solution inlet 53 and electrolyte solution outlet 54 of rotor receiving recess 50 is substantially blocked.

Further, as shown in FIGS. 3D to 4B, cross-shaped rotor 40 is forced by the flow of the electrolyte solution to rotate counterclockwise while sliding with respect to shaft 51. During this rotation and sliding, the tips of both main vanes 43, 44 are substantially in contact with inner wall surface 52 of rotor receiving recess 50, whereby the electrical conduction through the electrolyte solution between electrolyte solution inlet 53 and electrolyte solution outlet 54 is substantially blocked. On the other hand, during the rotation from the rotational position shown in FIG. 3D to the rotational position shown in FIG. 4B, more precisely, from the position immediately after the rotational position shown in FIG. 3C to the position just before the rotational position shown in FIG. 4C, neither of the pair of auxiliary vanes 44, 45 is in contact with inner wall surface 52 of rotor receiving recess 50.

Thereafter, cross-shaped rotor 40 reaches the rotational position shown in FIG. 4C. Next, during rotation of the cross-shaped rotor from the rotational position shown in FIG. 4C to the rotational position shown in FIG. 4D, cross-shaped rotor 40 stops sliding with respect to shaft 51 at a predetermined rotational position. In other words, during passage of the tip of second main vane 43 of the pair of main vanes through electrolyte solution inlet (i.e. fluid inlet) 53, the center of cross-shaped rotor 40 starts coinciding with shaft 51 at a predetermined rotational position. In this way, cross-shaped rotor 40 rotates counterclockwise about shaft 51 and reaches the rotational position shown in FIG. 4E (i.e. the rotational position shown in FIG. 3A). During this rotation from the rotational position shown in FIG. 4C to the rotational position shown in FIG. 4E, the tip of at least first main vane 42 of the pair of main vanes and the tip of second auxiliary vane 45 of the pair of auxiliary vanes are substantially in contact with inner wall surface 52 of rotor receiving recess 50. Thus, the electrical conduction through the electrolyte solution between electrolyte solution inlet 53 and electrolyte solution outlet 54 of rotor receiving recess 50 is substantially blocked.

The above sequence of rotational movements of cross-shaped rotor 40 is continued as long as cross-shaped rotor 40 remains forced by the flow of the electrolyte solution into rotor receiving recess 50 through electrolyte solution inlet 53. With the sequence of rotational movements, the fluid that has flowed in through electrolyte solution inlet 53 flows out through electrolyte solution outlet 54.

As described above, cross-shaped rotor 40 made of an insulating material that is forced to rotate by the flow of the electrolyte solution, is received in slit 35 of cell frame 20. This allows an increase in the electrical resistance of the electrolyte solution in slit 35, and a reduction in the shunt current loss. Further, since only installation of cross-shaped rotor 40 in slit 35 is required for increasing the electrical resistance of the electrolyte solution, the flow channel structure of cell frame 20 does not become complicated. In addition, there is no need for a complicated mechanism to rotate cross-shaped rotor 40, and therefore a complicated operation control is not needed. For example, to increase the electrical resistance of the electrolyte solution in the slit, the slit may be narrowed or lengthened, which significantly affects the volume of the electrolyte solution flowing through slit 35. The installation of cross-shaped rotor 40 is also advantageous in that it does not have such an adverse effect.

The insulating material of cross-shaped rotor 40 is not limited to a particular one as long as it has a strength sufficient enough not to impair the function of cross-shaped rotor 40, and for example may be the same insulating material as that of frame body 21. As the insulating material of frame body 21, there may be used a material that has an appropriate rigidity, that does not react with an electrolyte solution, and that has resistance to it (chemical resistance, acid resistance, or the like). Such materials include, for example, vinyl chloride, polyethylene, and polypropylene.

The movement of cross-shaped rotor 40 relative to shaft 51 is defined by the shape of rotor receiving recess 50 (i.e. the outline of inner wall surface 52), as can be seen from FIGS. 3A to 4E. However, this means that the shape of rotor receiving recess 50 may be appropriately determined depending on the desired movement of cross-shaped rotor 40 relative to shaft 51. In other words, rotor receiving recess 50 may have any shape, as long as the direction of rotation of cross-shaped rotor 40 is uniquely determined by the flow of the electrolyte solution into rotor receiving recess 50 through electrolyte solution inlet 53, and as long as cross-shaped rotor 40 always substantially blocks the electrical conduction through the electrolyte solution between electrolyte solution inlet 53 and electrolyte solution outlet 54 of rotor receiving recess 50. For unique determination of the direction of rotation of cross-shaped rotor 40, during the half-rotation of cross-shaped rotor 40, the center of cross-shaped rotor 40 (i.e. the center of gravity thereof in the plane of its rotation) must coincide with shaft 51 in a predetermined rotation range and deviate from shaft 51 in other rotation ranges. In addition, when the center of cross-shaped rotor 40 coincides with shaft 51, at least the tip of either of auxiliary vanes 44, 45 must be in contact with inner wall surface 52 of rotor receiving recess 50. The predetermined rotation range corresponds to a range from a predetermined rotation position during passage of the tip of one vane of the pair of main vanes 42, 43 through electrolyte solution inlet 53 to a predetermined rotation position during passage of the tip of the other vane through electrolyte solution outlet 54. In the example illustrated in FIGS. 3A to 4E, the predetermined rotation range corresponds to a range from the rotation position shown in FIG. 4D, through the rotation position shown in FIG. 3A, i.e. FIG. 4E, to the rotational position shown in FIG. 3B. Further, for always substantially blocking the electrical conduction through the electrolyte solution, cross-shaped rotor 40 must rotate while being substantially in contact with at least one point of each of two portions 52a, 52b, separated from each other by electrolyte solution inlet 53 and electrolyte solution outlet 54, of inner wall surface 52 defining rotor receiving recess 50. The term "substantially in contact with" as used herein means that there may be a slight gap between cross-shaped rotor 40 and inner wall surface 52 of rotor receiving recess 50 as long as the electrical conduction through the electrolyte solution occurring at the gap is negligible.

Accordingly, the shape of rotor receiving recess 50 as illustrated is merely an example, and may be appropriately changed as long as the above two requirements (i.e. requirement for the direction of rotation of cross-shaped rotor 40 and requirement for blocking the electrical conduction) are met. For example, shaft 51 slides relative to base 41 to reach the end of base 41 (see FIG. 3F), but the sliding range of shaft 51 relative to base 41 is not particularly limited as long as the above two requirements are met. In other words, when such a relative sliding range is appropriately determined, the shape of rotor receiving recess 50 may be determined based on the determined range so as to meet the above two requirements. Further, as long as the above two requirements are met, the range in which auxiliary vanes 44, 45 are in contact with inner wall surface 52 of rotor receiving recess 50 is not limited to the illustrated range, and may be appropriately determined. However, for example, if auxiliary vanes 44, 45 are in contact with inner wall surface 52 in a rotation range wider than the illustrated range, then the configuration of rotor receiving recess 50 would be more complicated due to the rotational conditions of cross-shaped rotor 40 and the like. Therefore, similar to the illustrated example, it is preferable that the contact of auxiliary vanes 44, 45 with inner wall surface 52 begins immediately before the tip of one vane of main vanes 42, 43 passes through electrolyte solution inlet 53 (see FIG. 4C), and ends immediately after the tip of the other vane passes through electrolyte solution outlet 54 (see FIG. 3C).

The shape of rotor receiving recess 50 also depends on the shape of cross-shaped rotor 40 and the position of shaft 51 relative to slit 35. In other words, once the shape of cross-shaped rotor 40 is determined and the position of shaft 51 relative to slit 35 is determined, the shape of rotor receiving recess 50 may be determined based on them so as to meet the above two requirements. Thus, the shape of cross-shaped rotor 40 is not limited to a particular one as long as it includes base 41, the pair of main vanes 42, 43 and the pair of auxiliary vanes 44, 45. For example, although the shape of rotor receiving recess 50 as illustrated is designed on the assumption that the length of the main vanes 43, 44 and the length of the auxiliary vanes 44, 45 are the same, they may be different. Further, the position of shaft 51 relative to slit 35 is not limited to a particular one as long as it deviates from the straight line connecting electrolyte solution inlet 53 and electrolyte solution outlet 54.

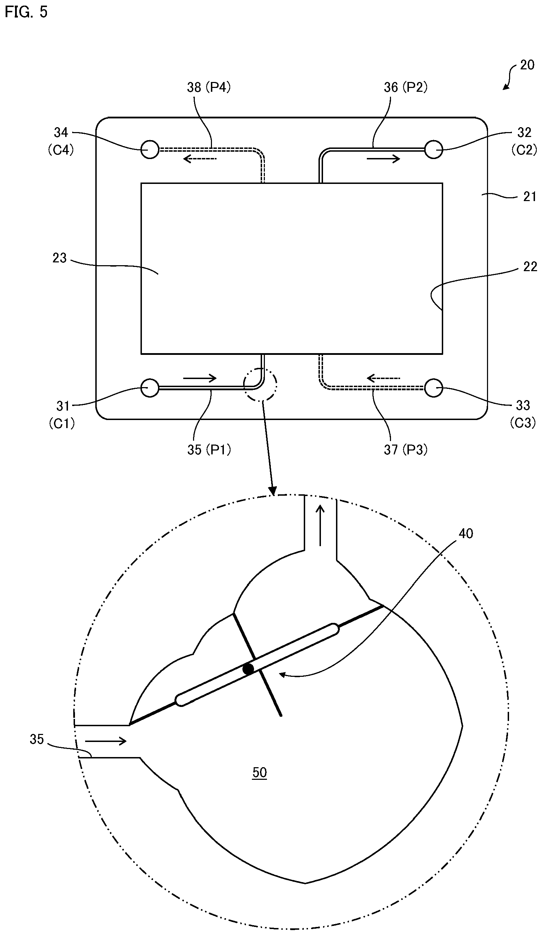

In the above embodiment, cross-shaped rotor 40 is installed at a horizontal portion of slit 35, but the installation position of cross-shaped rotor 40 is not limited thereto. For example, cross-shaped rotor 40 may be installed at a curved portion of slit 35 as shown in FIG. 5, or may be installed at a vertical portion thereof. It should be noted that cross-shaped rotor 40 does not necessarily have to be installed at the same position (e.g. horizontal portion) in all of slits 35-38. For example, the installation position of cross-shaped rotor 40 may differ between slits 35, 37 on the supply side and slits 36, 38 on the return side. Alternatively, the installation position of cross-shaped rotor 40 may differ between slits 35, 36 on the positive electrode side and slits 37, 38 on the negative electrode side.

Further, when cell frames 20 are stacked to form cell stack 2, a plurality of cross-shaped rotors 40 corresponding to the same slits 35 may be located at the same position when viewed from the stacking direction. In this case, the plurality of cross-shaped rotors 40 are preferably configured to rotate in synchronization with each other, whereby the flow of the electrolyte solution can be equalized regardless of the position of cell frame 20 (cell 10) to perform stable operation (charge/discharge process). As a method of synchronizing the plurality of cross-shaped rotors 40, there may be used a method of magnetically coupling them to each other, such as by making a part of cross-shaped rotor 40 of a magnetic material.

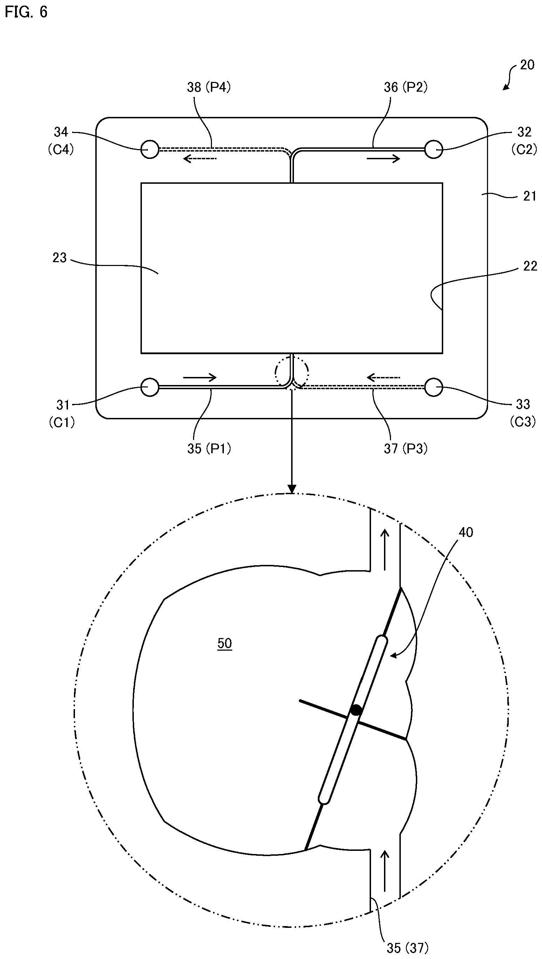

The shapes of slits 35-38 as illustrated are merely examples and may be other various shapes, and it should be noted that the installation position of cross-shaped rotor 40 may be variously changed depending on the shapes of such slits 35-38. For example, FIG. 6 shows a configuration example of slits 35-38 having vertical portions that overlap each other in a plan view. In such a configuration example, as shown, cross-shaped rotor 40 in slit 35 on the positive electrode side (i.e. on one surface side of frame body 21) and cross-shaped rotor 40 in slit 37 on the negative electrode side (i.e. on the other surface side of frame body 21) may be located at the same position in one cell frame 20 in a plan view. In this case, these cross-shaped rotors 40 may be adapted to rotate in synchronization with each other as described above. Further, when such cell frames 20 form cell stack 2, cross-shaped rotors 40 in adjacent cell frames 20 may also be adapted to rotate in synchronization with each other. Specifically, a plurality of cross-shaped rotors 40 corresponding to slits 35 on the positive electrode side and a plurality of cross-shaped rotors 40 corresponding to slits 37 on the negative electrode side may be adapted to rotate in synchronization with each other. This is not only advantageous for performing stable operation as described above, but also advantageous in that the distance between cross-shaped rotors 40 is shortened to facilitate magnetic coupling between them, as compared with, for example, the case where only cross-shaped rotors 40 on the positive electrode side are magnetically coupled to and synchronized with each other.

In the above embodiment, the positive electrolyte solution is supplied from through-hole 31 on the lower left corner to opening 22 so as to flow upward, and then returned to through-hole 32 on the upper right corner, but the flow direction of the positive electrolyte solution is not limited thereto. Similarly, in the above embodiment, the negative electrolyte solution is supplied from through-hole 33 on the lower right corner to opening 21 so as to flow upward, and then returned to through-hole 34 on the upper left corner, but the flow direction of the negative electrolyte solution is not limited thereto. For example, one of the positive and negative electrolyte solutions may flow downward through opening 22. Alternatively, both of the positive and negative electrolyte solutions may flow downward through opening 22. In either case, cross-shaped rotor 40 as described above may be installed in each of slits 35-38.

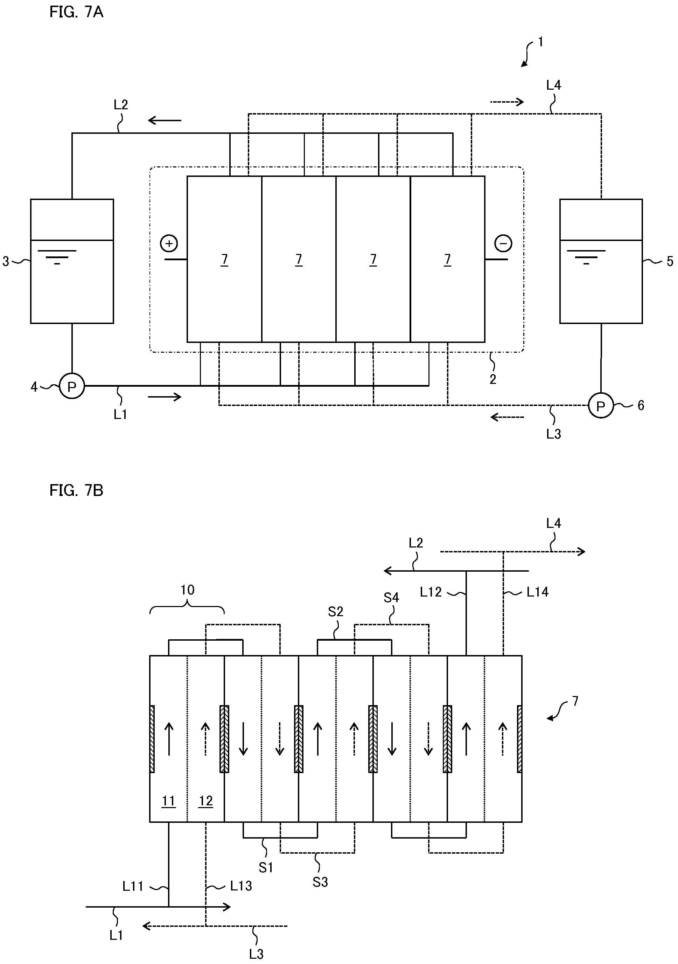

Further, in the above embodiment, cells 10 are connected to each other such that each of the electrolyte solutions flows in parallel through cells 10, but the connection configuration of cells 10 is not limited thereto. For example, cells 10 may be connected to each other such that each of the electrolyte solutions flows in series through cells 10, and even in such a configuration, cross-shaped rotor 40 as described above may be installed in each of slits 35-38 of cell frame 20. Alternatively, redox flow battery 1 may have a hierarchical flow channel configuration including the combination of parallel and serial flow channels. FIGS. 7A and 7B are schematic configuration diagrams of the redox flow battery according to such a variation.

In the variation shown in FIGS. 7A and 7B, cell stack 2 is divided into a plurality of cell groups 7, each of which consists of a plurality of cells 10. Cell groups 7 are connected to positive electrode-side tank 3 through positive electrode-side incoming pipe L1 and positive electrode-side outgoing pipe L2, and to negative electrode-side tank 5 through negative electrode-side incoming pipe L3 and negative electrode-side outgoing pipe L4, as shown in FIG. 7A. In other words, cell groups 7 are connected to each other such that each of the electrolyte solutions flows in parallel through cell groups 7. On the other hand, cells 10 in each of cell groups 7 are connected to each other such that each of the electrolyte solutions flows in series through cells 10, as shown in FIG. 7B. That means that, in each of cell groups 7, only two of through-holes 31-34 in two adjacent cell frames 20 are in fluid communication with each other such that each of the electrolyte solutions flows through cells 10 sequentially in the stacking direction. Specifically, two adjacent through-holes 31 on the lower left corner and two slits 35 connected thereto constitute serial flow channel S1 for the positive electrolyte solution, and two adjacent through-holes 32 on the upper right corner and two slits 36 connected thereto constitute serial flow channel S2 for the positive electrolyte solution. Two adjacent through-holes 33 on the lower right corner and two slits 37 connected thereto constitute serial flow channel S3 for the negative electrolyte solution, and two adjacent through-holes 34 on the upper left corner and two slits 38 connected thereto constitute serial flow channel S4 for the negative electrolyte solution. Also in such a configuration, cross-shaped rotor 40 as described above may be installed in each of slits 35-38 of cell frame 20.

Further, in addition to or instead of cross-shaped rotor 40 in cell frame 20, connection pipes L11-L14 that respectively connect cell group 7 and pipes L1-L4 may be provided with a rotor received therein and forced to rotate by the flow of the electrolyte solution through connection pipes L11-L14. This also allows, as a whole of redox flow battery 1, an increase in the electrical resistance of the electrolyte solution, and a reduction in the shunt current loss. Such a rotor includes the cross-shaped rotator as described above, a pair of Roots rotors as described below, and a pair of oval gears which operate substantially in the same principle as the Roots rotor.

The hierarchical flow channel configuration of redox flow battery 1 is not limited to the flow channel configuration in which the serial flow channels are connected in parallel as described above, and may be, for example, a flow channel configuration in which parallel flow channels are connected in parallel. That means that cells 10 in each of cell groups 7 may constitute a parallel flow channel similar to that of cells 10 shown in FIG. 1B, and cell groups 7 may be connected in parallel to form cell stack 2.

In the variation shown in FIGS. 7A and 7B, positive electrode-side tank 3 may be divided into two tanks (i.e. tank connected to positive electrode-side incoming pipe L1 and tank connected to positive electrode-side outgoing pipe L2) which separately store two types of positive electrolyte solutions having different concentration ratios of the reduced-state active material and the oxidized-state active material. Similarly, negative electrode-side tank 5 may be divided into two tanks (i.e. tank connected to negative electrode-side incoming pipe L3 and tank connected to negative electrode-side outgoing pipe L4) which separately store two types of negative electrolyte solutions having different concentration ratios of the reduced-state active material and the oxidized-state active material. For example, the tank connected to pipe L1 may store the positive electrolyte solution containing a relatively large amount of the reduced-state positive-electrode active material, and the tank connected to pipe L2 may store the positive electrolyte solution containing a relatively large amount of the oxidized-state positive-electrode active material. Further, the tank connected to pipe L3 may store the negative electrolyte solution containing a relatively large amount of the oxidized-state negative-electrode active material, and the tank connected to pipe L4 may store the negative electrolyte solution containing a relatively large amount of the reduced-state negative-electrode active material.

In that case, during the charge process, positive cell 11 is supplied with the positive electrolyte solution containing a relatively large amount of the reduced-state positive-electrode active material from the tank connected to pipe L1, and negative cell 12 is supplied with the negative electrolyte solution containing a relatively large amount of the oxidized-state negative-electrode active material from the tank connected to pipe L3. The oxidation reaction proceeds continuously in positive cell 11, and the positive electrolyte solution containing the positive-electrode active material that has changed into the oxidized state is returned to the tank connected to pipe L2. The reduction reaction proceeds continuously in negative cell 12, and the negative electrolyte solution containing the negative-electrode active material that has changed into the reduced state is returned to the tank connected to pipe L4. On the other hand, during the discharge process, positive cell 11 is supplied with the positive electrolyte solution containing a relatively large amount of the oxidized-state positive-electrode active material from the tank connected to pipe L2, and negative cell 12 is supplied with the negative electrolyte solution containing a relatively large amount of the reduced-state negative-electrode active material from the tank connected to pipe L4. The reduction reaction proceeds continuously in positive cell 11, and the positive electrolyte solution containing the positive-electrode active material that has changed into the reduced state is returned to the tank connected to pipe L1. The oxidation reaction proceeds continuously in negative cell 12, and the negative electrolyte solution containing the negative-electrode active material that has changed into the oxidized state is returned to the tank connected to pipe L3.

In the above embodiment including the variation shown in FIGS. 7A and 7B, every cell frames 20 in cell stack 2 may not be provided with cross-shaped rotor 40. For example, cell frame 20 located in the region where the shunt current loss is relatively unlikely to occur, may not be provided with cross-shaped rotor 40. Similarly, in the variation shown in FIGS. 7A and 7B, a connection pipe located in the region where the shunt current loss is relatively unlikely to occur, from among all the connection pipes (i.e. flow passages) connecting cell groups 7 and pipes L1-L4, may not be provided with the rotor.

### (Second Embodiment)

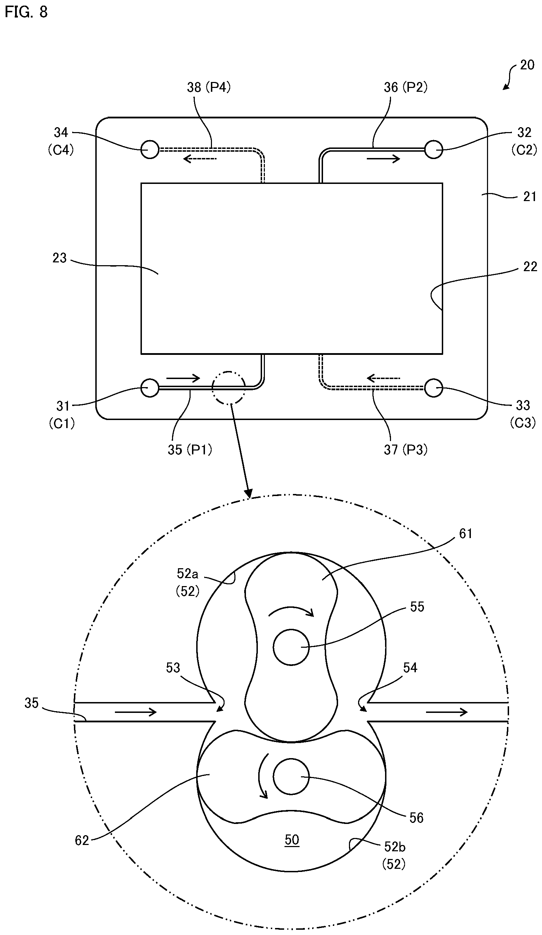

FIG. 8 is a schematic plan view of the cell frame according to a second embodiment of the present invention, corresponding to FIG. 2.

In this embodiment, the rotor installed in the slit (and the accompanying rotor receiving recess) are structurally different from those of the first embodiment, and other components are identical to those of the first embodiment. Hereinafter, the components identical to those of the first embodiment will be denoted by identical reference numerals in the drawings, description thereof will be omitted, and only the components that are different from those of the first embodiment will be described. It should be noted that some of the above variations to the first embodiment may also be applied to this embodiment.

In this embodiment, a pair of Roots rotors 61, 62 are received in slit 35. Roots rotors 61, 62 are respectively fixed to rotation shafts 55, 56 that are parallel to the depth direction of slit 35 (i.e. the thickness direction of frame body 21), and each of rotation shafts 55, 56 is rotatably provided in frame body 21. Rotation shafts 55, 56 may be fixed to frame body 21, and Roots rotors 61, 62 may be rotatably mounted to rotation shaft 55, 56, respectively.

Roots rotors 61, 62 are forced by the flow of the electrolyte solution into rotor receiving recess 50 through electrolyte solution inlet 53 to respectively rotate outwardly about rotation shafts 55, 56, i.e., to rotate in opposite directions. In this case, Roots rotors 61, 62 rotate while being substantially in contact with each other. Further, one Roots rotor 61 rotates while being substantially in contact with one portion 52a of inner wall surface 52 of rotor receiving recess 50, and the other Roots rotor 62 rotates while being substantially in contact with the other portion 52b thereof. Thus, Roots rotors 61, 62 can always substantially block the electrical conduction through the electrolyte solution between electrolyte solution inlet 53 and electrolyte solution outlet 54 of rotor receiving recess 50. The term "substantially in contact with" as used herein means that there may be a slight gap between each of Roots rotors 61, 62 and inner wall surface 52 of rotor receiving recess 50, or a slight gap between Roots rotors 61, 62, as long as the electrical conduction through the electrolyte solution occurring at the gap is negligible as described above. The electrolyte solution that has flowed into rotor receiving recess 50 passes through a space formed between each of Roots rotors 61, 62 and inner wall surface 52 of rotor receiving recess 50, and then flows out of rotor receiving recess 50 through electrolyte solution outlet 54.

In the illustrated embodiment, Roots rotors 61, 62 are of the two-lobed type, but may be of the three-lobed type. Further, similar to cross-shaped rotor 40 of the first embodiment, when cell frames 20 are stacked to form cell stack 2, a plurality of pairs of Roots rotors 61, 62 may be located at the same position when viewed from the stacking direction so as to rotate in synchronization with each other. As a method of synchronizing the pairs of Roots rotors 61, 62, there may be used a method by means of mechanical coupling means, such as fixation of the plurality of Roots rotors 61, 62 to common rotation shafts 55, 56, as well as the magnetic coupling means as described above.

Instead of Roots rotors 61, 62, a pair of oval gears which operate in substantially the same principle as the Roots rotors may be used.

### Reference Signs List

- 1: Redox flow battery
- 2: Cell stack
- 3: Positive electrode-side tank
- 4: Positive electrode-side pump
- 5: Negative electrode-side tank
- 6: Negative electrode-side pump
- 7: Cell group
- 10: Cell
- 11: Positive cell
- 11a: Positive electrode
- 12: Negative cell
- 12a: Negative electrode
- 13: Membrane
- 20: Cell frame
- 21: Frame body
- 22: Opening
- 23: Bipolar plate
- 31-34: Through-holes
- 35-38: Slits
- 40: Cross-shaped rotor
- 41: Base
- 41a: Long hole
- 42, 43: Main vanes
- 44, 45: Auxiliary vanes
- 50: Rotor receiving recess
- 51: Shaft
- 52: Inner wall surface
- 52a: One portion (of inner wall surface)
- 52b: Other portion (of inner wall surface)
- 53: Electrolyte solution inlet (Fluid inlet)
- 54: Electrolyte solution outlet (Fluid outlet)
- 55, 56: Rotation shafts
- 61, 62: Roots rotors
- L1: Positive electrode-side incoming pipe
- L2: Positive electrode-side outgoing pipe
- L3: Negative electrode-side incoming pipe
- L4: Negative electrode-side outgoing pipe
- L11-L14: Connection pipes
- C1, C3: Common supply flow channels
- C2, C4: Common return flow channels
- P1, P3: Individual supply flow channels
- P2, P4: Individual return flow channels
- S1-S4: Serial flow channels

## Claims

1. A cell frame comprising:
a frame body having an opening, the frame body including a through-hole for passage of a fluid containing an active material, the through-hole penetrating from one surface of the frame body to the other surface thereof around the opening, and a groove-like slit formed in the one surface or the other surface and connecting the through-hole and the opening; and
a rotor made of an insulating material, the rotor received in the slit and forced to rotate by a flow of the fluid through the slit between the through-hole and the opening.

2. The cell frame according to claim 1, wherein the rotor is received in a rotor receiving recess which is a portion of the slit that is wider than other portions thereof, and rotates in a plane perpendicular to a depth direction of the slit.

3. The cell frame according to claim 2, wherein the rotor rotates while being substantially in contact with at least one point of each of two portions of an inner wall surface defining the rotor receiving recess, the two portions separated from each other by a fluid inlet and a fluid outlet of the rotor receiving recess.

4. The cell frame according to claim 3, wherein the rotor is a cross-shaped rotor that rotates while sliding in the plane with respect to a shaft projecting from a bottom surface of the rotor receiving recess.

5. The cell frame according to claim 4, wherein the cross-shaped rotor includes: an elongated base including a long hole that extends in a longitudinal direction of the base, and supported by the shaft inserted into the long hole to be longitudinally slidable and rotatable; a pair of main vanes extending in opposite directions from both longitudinal ends of the base; and a pair of auxiliary vanes provided in a longitudinal center portion of the base and extending in opposite directions from both transverse ends of the base along a direction perpendicular to the pair of main vanes.

6. The cell frame according to claim 3, wherein the rotor is composed of a pair of Roots rotors that rotates while being in contact with each other.

7. The cell frame according to claim 3, wherein the rotor is composed a pair of oval gears that rotates while being in contact with each other.

8. The cell frame according to any one of claims 1 to 7, wherein the frame body includes a further through-hole for passage of a fluid containing an active material, the further through-hole penetrating from one surface of the frame body to the other surface thereof around the opening, and a further groove-like slit formed in a surface opposite to a surface on which the slit is formed and connecting the further through-hole and the opening, and
wherein the cell frame further comprises a further rotor made of an insulating material, the further rotor received in the further slit and forced to rotate by a flow of the fluid through the further slit between the further through-hole and the opening, the further rotor having the same configuration as the rotor.

9. The cell frame according to claim 8, wherein the rotor and the further rotor are located at the same position in a plan view, and are mechanically or magnetically coupled to rotate in synchronization with each other.

10. A redox flow battery comprising a cell stack having a plurality of stacked cells, wherein at least one of a plurality of cell frames that forms the plurality of cells is a cell frame according to any one of claims 1 to 7.

11. The redox flow battery according to claim 10, wherein the plurality of cell frames includes a plurality of the rotors.

12. The redox flow battery according to claim 11, wherein the plurality of rotors is located at the same position when viewed from a stacking direction of the cell stack, and is mechanically or magnetically coupled to rotate in synchronization with each other.

13. A redox flow battery comprising a cell stack having a plurality of stacked cells, wherein at least one of a plurality of cell frames that forms the plurality of cells is a cell frame according to claim 8.

14. The redox flow battery according to claim 13, wherein the plurality of cell frames includes a plurality of the rotors and a plurality of the further rotors.

15. The redox flow battery according to claim 14, wherein the plurality of rotors and the plurality of further rotors are located at the same position when viewed from a stacking direction of the cell stack, and are mechanically or magnetically coupled to rotate in synchronization with each other.

16. The redox flow battery according to any one of claims 9 to 15, wherein the plurality of cells in the cell stack is connected to each other such that the fluid flows in parallel through the plurality of cells.

17. The redox flow battery according to any one of claims 9 to 15, wherein the plurality of cells in the cell stack is connected to each other such that the fluid flows in series through the plurality of cells.

18. The redox flow battery according to any one of claims 9 to 15, wherein the cell stack is divided into a plurality of cell groups each of which consists of the plurality of cells, the plurality of cell groups is connected to each other such that the fluid flows in parallel through the plurality of cell groups, and the plurality of cells in each of the cell groups is connected to each other such that the fluid flows in series or in parallel through the plurality of cells.

19. The redox flow battery of claim 18, further comprising a further rotor received in at least one of a plurality of flow passages respectively connected to the plurality of cell groups, the further rotor made of an insulating material and forced to rotate by a flow of the fluid through the at least one flow passage.

20. A redox flow battery comprising a cell stack having a plurality of stacked cells,
wherein the cell stack is divided into a plurality of cell groups each of which consists of the plurality of cells, the plurality of cell groups is connected to each other such that a fluid containing an active material flows in parallel through the plurality of cell groups, and the plurality of cells in each of the cell groups is connected to each other such that the fluid flows in series or in parallel through the plurality of cells, and
wherein the redox flow battery comprises a rotor received in at least one of a plurality of passage that are respectively connected to the plurality of cell groups, the rotor made of an insulating material and forced to rotate by a flow of the fluid through the at least one flow passage.
